# EUROPÄISCHE PATENTANMELDUNG

(11) **EP 3 816 907 A1**
(43) Veröffentlichungstag der Anmeldung: **05.05.2021**
(21) Anmeldenummer: 19206250.3
(22) Anmeldetag: 30.10.2019
(51) Int. Cl.: G06Q 20/20, G07G 1/12, G07D 11/50

(54) **BARGELD-ABRECHNUNGSVORRICHTUNG**

(71) Anmelder: Ratiotec GmbH & Co. KG, 45136 Essen (DE)
(72) Erfinder: Schneider, Manuel, 45479 Mülheim (DE)
(74) Vertreter: Andrejewski - Honke Patent- und Rechtsanwälte Partnerschaft mbB

(57) **Zusammenfassung**

Bargeld-Abrechnungsvorrichtung zum Zählen und Dokumentieren von Bargeldbeträgen, mit zumindest einer automatischen Bargeld-Zähleinrichtung, mit der in die Zähleinrichtung eingegebene Geldscheine und/oder Geldmünzen automatisch zählbar sind und mit der Bargeldbeträge bestimmbar sind. Es ist eine zentrale Speichereinrichtung vorhanden, mit der die mittels der Bargeld-Zähleinrichtung bestimmten Bargeldbeträge als Daten dokumentierbar sind. Nach Abschluss eines Zählvorganges in einer Zähleinrichtung wird ein dem dort bestimmten Bargeldbetrag entsprechendes Datensignal drahtlos von der Zähleinrichtung an die Speichereinrichtung gesendet und als Speicherbetrag abgespeichert. Jeder in der Speichereinrichtung gespeicherte Speicherbetrag wird automatisch von der Speichereinrichtung mit einer fortlaufenden Abrechnungsnummer sowie mit einem Datums- und Zeitstempel versehen. Diese Daten werden als Abrechnungsdaten in der Speichereinrichtung gespeichert.

## Beschreibung

Die Erfindung betrifft eine Bargeld-Abrechnungsvorrichtung zum Zählen und Dokumentieren von Bargeldbeträgen, insbesondere von Bargeldbeträgen aus Abrechnungen in Gewerbebetrieben, - mit zumindest einer automatischen Bargeld-Zähleinrichtung, mit der in die Zähleinrichtung eingegebene Geldscheine und/oder Geldmünzen automatisch zählbar sind und mit der Gesamt-Bargeldbeträge und/oder Teil-Bargeldbeträge bestimmbar sind. - Eine erfindungsgemäß eingesetzte Bargeld-Zähleinrichtung wird insbesondere an Kassen bzw. Registrierkassen von Gewerbebetrieben eingesetzt. Mit der Zähleinrichtung kann bei einer Abrechnung ein Teil-Bargeldbetrag aus den vorhandenen Geldscheinen und/oder ein Teil-Bargeldbetrag aus den vorhandenen Geldmünzen bestimmt werden und/oder ein sich daraus ergebender Gesamt-Bargeldbetrag.

Die bislang bekannten automatischen Bargeld-Abrechnungen sind in der Regel mit relativ hohem Aufwand verbunden. So war es bisher erforderlich, dass - insbesondere die Point of Sale (POS)-Systemanbieter - dazu eine Mehrzahl unterschiedlicher Geräte in ihre Software integrieren mussten. Das verursacht neben dem hohen Aufwand auch nicht unerhebliche Kosten und oftmals auch eine gewisse Fehler-bzw. Störanfälligkeit.

Demgegenüber liegt der Erfindung das technische Problem zugrunde, ein Bargeld-Abrechnungssystem bzw. eine Bargeld-Abrechnungsvorrichtung der eingangs genannten Art anzugeben, mit der auf funktionssichere, wenig aufwendige und kostengünstige Weise das Zählen und Dokumentieren einer Vielzahl von Bargeldbeträgen möglich ist.

Zur Lösung dieses technischen Problems lehrt die Erfindung eine Bargeld-Abrechnungsvorrichtung zum Zählen und Dokumentieren von Bargeldbeträgen, insbesondere für Abrechnungen in Gewerbebetrieben, - mit zumindest einer automatischen Bargeld-Zähleinrichtung, mit der in die Zähleinrichtung eingegebene Geldscheine und/oder Geldmünzen automatisch zählbar sind und mit der Gesamt-Bargeldbeträge und/oder Teil-Bargeldbeträge bestimmbar sind

und mit einer zentralen Speichereinrichtung, mit der die mittels der Bargeld-Zähleinrichtung bestimmten Bargeldbeträge als Daten dokumentierbar sind,

wobei nach Abschluss eines Zählvorganges in der Zähleinrichtung ein dem dort bestimmten Bargeldbetrag entsprechendes Datensignal drahtlos von der Zähleinrichtung an die Speichereinrichtung gesendet wird und als Speicherbetrag in der Speichereinrichtung abgespeichert wird,

wobei jeder in der Speichereinrichtung gespeicherte Speicherbetrag automatisch von der Speichereinrichtung mit einer fortlaufenden Abrechnungsnummer sowie mit einem Zeitstempel bzw. mit einem Datums- und Zeitstempel versehen wird und wobei diese Daten als Abrechnungsdaten in der Speichereinrichtung gespeichert werden.

Es liegt im Rahmen der Erfindung, dass lediglich einer Speichereinrichtung eine Mehrzahl bzw. eine Vielzahl von Bargeld-Zähleinrichtungen zugeordnet ist und dass alle diese Bargeld-Zähleinrichtungen ein dem darin bestimmten Bargeldbetrag entsprechendes Datensignal drahtlos von der Zähleinrichtung an die Speichereinrichtung senden. Die zentrale Speichereinheit ermöglicht es, dass die in den Bargeld-Zähleinrichtungen bestimmten Bargeldbeträge in der Speichereinrichtung abgespeichert werden und insbesondere dokumentiert werden. Dabei liegt es im Rahmen der Erfindung, dass jeder einem Bargeldbetrag entsprechender und in der Speichereinrichtung abgespeicherter Speicherbetrag zumindest mit einer fortlaufenden Abrechnungsnummer und mit einem Zeitstempel bzw. mit einem Datums- und Zeitstempel versehen wird. Die entsprechenden Daten können dann als Abrechnungsdaten in der Speichereinrichtung gespeichert werden und vorzugsweise von der Speichereinrichtung an andere Systeme bzw. Hardware- und/oder Software-Systeme weitergegeben werden.

Eine besonders empfohlene Ausführungsform der Erfindung ist dadurch gekennzeichnet, dass die Bargeld-Zähleinrichtung als Geldschein-Zähleinrichtung und/oder Geldschein-Wägeeinrichtung und/oder als Geldmünzen-Zähleinrichtung und/oder als Geldmünzen-Wägeeinrichtung ausgebildet ist. - Eine bewährte Ausführungsform der Erfindung zeichnet sich dadurch aus, dass an einer Abrechnungsstelle mit zumindest einer Bargeld-Zähleinrichtung ein Teil-Bargeldbetrag aus an der Abrechnungsstelle vorhandenen Geldscheinen bestimmt wird und/oder ein Teil-Bargeldbetrag aus an der Abrechnungsstelle vorhandenen Geldmünzen bestimmt wird und dass ein dem jeweiligen Teil-Bargeldbetrag entsprechendes Datensignal drahtlos an die Speichereinrichtung gesendet wird und als Speicherbetrag in der Speichereinrichtung abgespeichert wird. Insoweit liegt es im Rahmen der Erfindung, dass die sich aus Geldscheinen ergebenden Teil-Bargeldbeträge und/oder die sich aus Geldmünzen ergebenden Teil-Bargeldbeträge separat gezählt und gespeichert bzw. dokumentiert werden können. Es liegt weiterhin im Rahmen der Erfindung, dass an einer Abrechnungsstelle ein Gesamt-Bargeldbetrag aus den vorhandenen Geldscheinen und Geldmünzen bestimmt wird und ein entsprechendes Datensignal drahtlos von der Zähleinrichtung an die Speichereinrichtung gesendet wird und dort als Speicherbetrag in der Speichereinrichtung abgespeichert wird. - Empfohlenermaßen ist jeder Bargeld-Zähleinrichtung zumindest ein Funkchip bzw. ein Funkchip, insbesondere ein Bluetooth-Funkchip zugeordnet, über den das entsprechende Datensignal drahtlos von der Zähleinrichtung an die Speichereinrichtung gesendet werden kann.

Fernerhin liegt es im Rahmen der Erfindung, dass eine Bargeld-Zähleinrichtung einer Registrierkasse mittels Datensignal über eine Schnittstelle - insbesondere über einen Webservice und bevorzugt über eine REST-Schnittstelle - mit der Speichereinrichtung verbunden ist. - Eine besonders empfohlene Ausführungsform der Erfindung zeichnet sich dadurch aus, dass das einem Gesamt-Bargeldbetrag und/oder einem Teil-Bargeldbetrag entsprechende Datensignal als Bluetooth-Datensignal an die Speichereinrichtung gesendet wird.

Eine besonders bewährte Ausführungsform der Erfindung ist dadurch gekennzeichnet, dass das einem Gesamt-Bargeldbetrag und/oder das einem Teil-Bargeldbetrag entsprechende Datensignal als verschlüsseltes Datensignal an die Speichereinrichtung gesendet wird. Zweckmäßigerweise erfolgt die Verschlüsselung des Datensignals mittels Diffie-Hellman-Schlüsselaustausch. Gemäß einer Ausführungsvariante ist der Datentransport zu der Speichereinrichtung mittels 256-Bit-AES-Verschlüsselung verschlüsselt. Eine Verschlüsselung ist aber auch über andere Verfahren, beispielsweise über ein 128 Bit-Verfahren möglich.

Eine bevorzugte Ausführungsform der Erfindung zeichnet sich dadurch aus, dass eine Mehrzahl von Bargeld-Zähleinrichtungen vorhanden ist, wobei diese Bargeld-Zähleinrichtungen der zentralen Speichereinrichtung zugeordnet sind und wobei nach Bestimmung eines Gesamt-Bargeldbetrages und/oder Teil-Bargeldbetrages von jeder der Bargeld-Zähleinrichtungen jeweils ein entsprechendes Datensignal drahtlos an die Speichereinrichtung gesendet wird, wobei die zentrale Speichereinrichtung zweckmäßigerweise an einem zentralen Ort, insbesondere in einem Gewerbebetrieb oder außerhalb eines Gewerbebetriebes angeordnet ist.

Es liegt im Rahmen der Erfindung, dass der Zeitstempel - mit dem ein in der Speichereinrichtung gespeicherter Speicherbetrag versehen ist - ein qualifizierter Zeitstempel ist. Zweckmäßigerweise wird der Zeitstempel auf Echtzeit-Basis generiert. - Nach einer Ausführungsform der Erfindung wird der Zeitstempel mittels Funktechnik - nicht manipulierbar - empfangen. Zweckmäßigerweise wird der Zeitstempel in regelmäßigen Zeitabständen synchronisiert und insbesondere regelmäßig synchronisiert. Insoweit genügt die Zeitstempel-Synchronisierung den behördlichen Grundsätzen für eine ordnungsgemäße Buchführung.

Erfindungsgemäß werden die ermittelten Bargeldbeträge jeweils als Speicherbetrag in der Speichereinrichtung abgespeichert und automatisch von der Speichereinrichtung mit einer fortlaufenden Abrechnungsnummer und mit einem Zeitstempel bzw. mit einem Datums- und Zeitstempel versehen. Diese Daten werden als Abrechnungsdaten in der Speichereinrichtung gespeichert. - Nach besonders bevorzugter Ausführungsform der Erfindung werden die Abrechnungsdaten von der Speichereinrichtung drahtlos an zumindest einen Drucker gesendet und auf Basis der Abrechnungsdaten ist mit dem Drucker ein Abrechnungsbeleg erstellbar bzw. druckbar. Es liegt im Rahmen der Erfindung, dass die Abrechnungsdaten als Bluetooth-Signale, insbesondere als verschlüsselte Bluetooth-Signale von der Speichereinrichtung an den Drucker übermittelt werden.

Es hat sich im Rahmen der Erfindung besonders bewährt, dass die Abrechnungsdaten von der Speichereinrichtung über W-LAN oder LAN an das Internet bzw. an eine Cloud übermittelt werden. Dadurch ist es möglich, dass relativ kurze Zeit - beispielsweise wenige Minuten - nach den Bargeldabrechnungen mit den Bargeld-Zähleinrichtungen alle Ergebnisse der Abrechnungen - beispielsweise sortiert nach Filialen und Kassierern - im Internet abgerufen werden können. Dieser Abruf ist zweckmäßigerweise passwortgeschützt, so dass ein unautorisiertes Abrufen der Daten nicht möglich ist.

Eine empfohlene Ausführungsformen der Erfindung ist dadurch gekennzeichnet, dass die erfindungsgemäße Speichereinrichtung eine Schnittstelle zur drahtlosen Übermittlung der Abrechnungsdaten an ein POS-System aufweist (POS: Point of Sale). Insoweit ist eine einfache Übergabe der Abrechnungsdaten direkt in ein POS-System problemlos möglich und zwar insbesondere unter Integration einer Mehrzahl von Abrechnungsstellen bzw. Kassensystemen und vorzugsweise unter Verwendung lediglich einer Speichereinrichtung. Insoweit ist eine Integration der Abrechnungsdaten in ein POS-System auf einfache Weise und mit geringem Aufwand realisierbar.

Gemäß empfohlener Ausführungsform der Erfindung weist die Speichereinrichtung neben einem internen Speicher zumindest ein Speichermedium auf, insbesondere in Form einer Speicherkarte. Es liegt dabei im Rahmen der Erfindung, dass auf dem Speichermedium bzw. auf der Speicherkarte die Abrechnungsdaten - insbesondere kundenspezifisch bzw. kundensortiert - langfristig abspeicherbar sind. Beispielsweise können die Abrechnungsdaten 11 Jahre lang in der Speichereinrichtung bzw. auf dem Speichermedium abgespeichert werden, so dass die Abrechnung auch konform zu gesetzlichen Vorschriften bzw. zu zukünftigen gesetzlichen Vorschriften ist.

Vorzugsweise ist die Speichereinrichtung als separates Bauteil ausgebildet, das lediglich oder zumindest vornehmlich drahtlos mit den weiteren Komponenten - insbesondere Bargeld-Zähleinrichtungen und/oder Drucker und/oder Internet und/oder Cloud und/oder POS-System - kommuniziert. Die Speichereinrichtung ist zweckmäßigerweise in einem Gehäuse bzw. in einem kompakten Gehäuse, insbesondere in einem quaderförmigen Gehäuse untergebracht. Die drahtlose Datenübermittlung von den Komponenten bzw. zu den Komponenten erfolgt empfohlenermaßen über Bluetooth aber auch andere drahtlose Datenübertragungen sind möglich.

Der Erfindung liegt die Erkenntnis zugrunde, dass die Erfindung ein variables und kompaktes Abrechnungssystem zur Verfügung stellt, bei dem lediglich eine einzelne drahtlos arbeitende Speichereinrichtung in das Abrechnungssystem bzw. in eine entsprechende Software integriert werden muss. Diese Speichereinrichtung kommuniziert problemlos mit bereits vorhandenen Komponenten bzw. Abrechnungskomponenten. Somit ist es lediglich notwendig zur Inbetriebnahme der erfindungsgemäßen Vorrichtung einmalig die Speichereinrichtung mit Schnittstelle einzurichten und zu integrieren und alle Abrechnungsvorgänge sind dann ohne weiteres speicherbar, dokumentierbar und auswertbar. Mit der erfindungsgemäßen Speichereinrichtung können auf einfache Weise Abrechnungen mehrerer Zähleinrichtungen, beispielsweise auch mehrerer Zähleinrichtungen einer Filiale gespeichert und dokumentiert werden. Dabei können auch separate Zähleinrichtungen für einerseits Münzen und andererseits Geldscheine problemlos integriert werden. Von besonderem Vorteil ist, dass die erfindungsgemäße Speichereinrichtung den gespeicherten Bargeldbeträgen (Speicherbeträgen) Dokumentationsdaten in Form von Abrechnungsnummer, Datum und Echtzeit automatisch hinzufügt und vorzugsweise werden die Abrechnungsdaten bzw. Dokumentationsdaten mehrere Jahre, beispielsweise 11 Jahre gespeichert. Insoweit werden die Dokumentationspflichten erfüllt und auch die gesetzlichen Vorschriften bzw. die zukünftigen gesetzlichen Vorschriften werden eingehalten. Die erfindungsgemäße Vorrichtung genügt auch den sicherheitstechnischen Anforderungen, da alle Datenübertragungen zu oder von der erfindungsgemäßen Speichereinrichtung vorzugsweise drahtlos und verschlüsselt erfolgen.

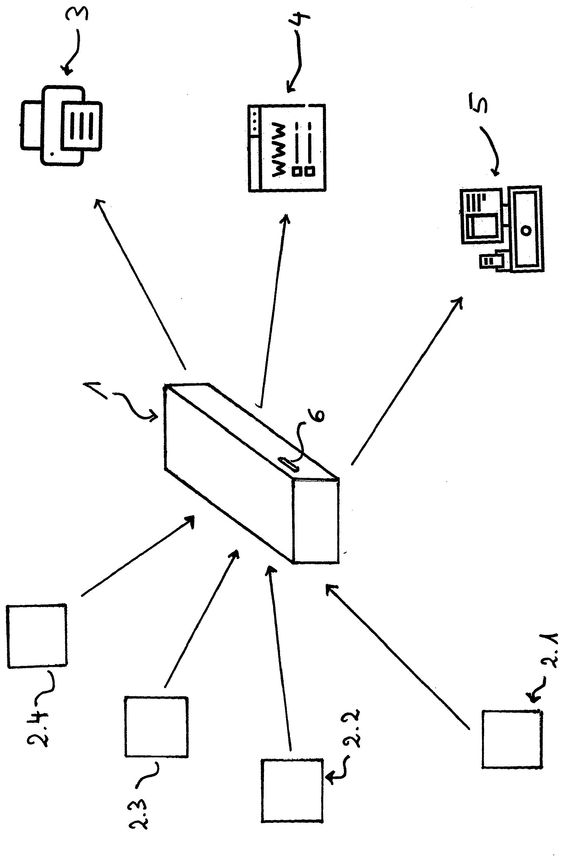

Nachfolgend wird die Erfindung anhand einer lediglich ein Ausführungsbeispiel darstellenden Zeichnung näher erläutert. Die einzige Figur zeigt schematisch die Funktionsweise der erfindungsgemäßen Abrechnungsvorrichtung.

Die Figur zeigt eine erfindungsgemäße Bargeld-Abrechnungsvorrichtung zum Zählen und Dokumentieren von Bargeldbeträgen, insbesondere für Abrechnungen in Gewerbebetrieben. Vorzugsweise und im Ausführungsbeispiel ist eine in einem quaderförmigen Gehäuse aufgenommene erfindungsgemäße Speichereinrichtung 1 vorhanden, die als zentrale Komponente der Abrechnungsvorrichtung bzw. des Abrechnungssystems dient. Die erfindungsgemäße Abrechnungsvorrichtung weist neben der Speichereinrichtung 1 im Ausführungsbeispiel vier automatische Bargeld-Zähleinrichtungen 2.1, 2.2, 2.3 und 2.4 auf. Im Ausführungsbeispiel mögen die beiden Bargeld-Zähleinrichtungen 2.1 und 2.3 als Geldmünzen-Zähleinrichtungen ausgebildet sein und die beiden Bargeld-Zähleinrichtungen 2.2 und 2.4 als Geldschein-Zähleinrichtungen. Mit diesen Bargeld-Zähleinrichtungen 2.1 bis 2.4 werden in die jeweilige Zähleinrichtung eingegebene Geldscheine oder Geldmünzen automatisch gezählt. Die jeweils durch Zählung ermittelten Teil-Geldbeträge werden als Datensignal von den Zähleinrichtungen 2.1 bis 2.4 drahtlos an die zentrale Speichereinrichtung 1 gesendet und dort jeweils als Speicherbetrag abgespeichert. Die drahtlose Übermittlung der Teil-Bargeldbeträge erfolgt nach bevorzugter Ausführungsform über Bluetooth-Datensignale und besonders bevorzugt in Form von verschlüsselten Bluetooth-Datensignalen. Es liegt im Rahmen der Erfindung, dass die Übermittlung der Datensignale von den Zähleinrichtungen 2.1 bis 2.4 insbesondere durch Betätigung eines Schalters bzw. einer Taste erfolgt. In der Speichereinrichtung 1 werden die jeweils ermittelten Bargeldbeträge bzw. Teil-Bargeldbeträge als Speicherbeträge abgespeichert.

Jeder gespeicherte Bargeldbetrag bzw. Speicherbetrag wird automatisch von der Speichereinrichtung 1 mit einer fortlaufenden Abrechnungsnummer sowie mit einem Zeitstempel bzw. mit einem Datums- und Zeitstempel versehen. Diese Daten werden als Abrechnungsdaten in der Speichereinrichtung 1 gespeichert. Der Zeitstempel ist zweckmäßigerweise ein qualifizierter Zeitstempel und wird auf Echtzeit-Basis generiert.

Nach bevorzugter Ausführungsform und im Ausführungsbeispiel können die Abrechnungsdaten von der Speichereinrichtung 1 drahtlos an einen Drucker 3 gesendet werden und auf Basis der Abrechnungsdaten ist mit dem Drucker 3 jeweils ein Abrechnungsbeleg erstellbar bzw. druckbar. Die Abrechnungsdaten werden zweckmäßigerweise drahtlos von der Speichereinrichtung 1 an den Drucker 3 gesendet und vorzugsweise als verschlüsseltes Bluetooth-Signal von der Speichereinrichtung 1 an den Drucker 3 übermittelt.

Weiterhin können bevorzugt und im Ausführungsbeispiel die Abrechnungsdaten von der Speichereinrichtung 1 drahtlos an das Internet 4 übermittelt werden. Die Übermittlung kann beispielsweise drahtlos über W-LAN erfolgen. Auch hier ist eine Verschlüsselung der drahtlosen Datensignale zweckmäßig.

Gemäß empfohlener Ausführungsform und im Ausführungsbeispiel verfügt die Speichereinrichtung 1 weiterhin über eine Schnittstelle zur drahtlosen Übermittlung der Abrechnungsdaten an ein POS-System 5. Auch die drahtlose Übermittlung dieser Datensignale erfolgt empfohlenermaßen verschlüsselt.

Eine besonders bewährte Ausführungsform der Erfindung ist dadurch gekennzeichnet, dass die Speichereinrichtung 1 neben zumindest einem internen Speicher zumindest ein Speichermedium aufweist, insbesondere in Form einer Speicherkarte 6. Auf dieser Speicherkarte 6 werden vorzugsweise die Abrechnungsdaten - insbesondere kundenspezifisch bzw. kundensortiert - langfristig abgespeichert. So kann beispielsweise eine Abspeicherung über elf Jahre erfolgen, sodass den Dokumentationspflichten und den gesetzlichen Vorschriften bzw. den zukünftigen gesetzlichen Vorschriften genügt wird.

## Patentansprüche

1. Bargeld-Abrechnungsvorrichtung zum Zählen und Dokumentieren von Bargeldbeträgen, insbesondere für Abrechnungen in Gewerbebetrieben, - mit zumindest einer automatischen Bargeld-Zähleinrichtung (2), mit der in die Zähleinrichtung (2) eingegebene Geldscheine und/oder Geldmünzen automatisch zählbar sind und mit der Gesamt-Bargeldbeträge und/oder Teil-Bargeldbeträge bestimmbar sind
und mit einer zentrale Speichereinrichtung (1), mit der die mittels der Bargeld-Zähleinrichtung (2) bestimmten Bargeldbeträge als Daten dokumentierbar sind,
wobei nach Abschluss eines Zählvorganges in der Zähleinrichtung (2) ein dem dort bestimmten Bargeldbetrag entsprechendes Datensignal drahtlos von der Zähleinrichtung (2) an die Speichereinrichtung (1) gesendet wird und als Speicherbetrag in der Speichereinrichtung (1) abgespeichert wird,
wobei jeder in der Speichereinrichtung (1) gespeicherte Speicherbetrag automatisch von der Speichereinrichtung (1) mit einer fortlaufenden Abrechnungsnummer sowie mit einem Zeitstempel bzw. mit einem Datums- und Zeitstempel versehen wird und wobei diese Daten als Abrechnungsdaten in der Speichereinrichtung (1) gespeichert werden.

2. Vorrichtung nach Anspruch 1, wobei die Bargeld-Zähleinrichtung (2) als Geldschein- und/oder Geldmünzen-Zähl- und/oder Wägeeinrichtung ausgebildet ist.

3. Vorrichtung nach einem der Ansprüche 1 oder 2, wobei die Bargeld-Zähleinrichtung (2) einer Registrierkasse mittels Datensignal über eine Schnittstelle - insbesondere über einen Webservice und bevorzugt über eine REST-Schnittstelle - mit der Speichereinrichtung (1) verbunden ist.

4. Vorrichtung nach einem der Ansprüche 1 bis 3, wobei das einem Gesamt-Bargeldbetrag und/oder Teil-Bargeldbetrag entsprechende Datensignal als Bluetooth-Datensignal an die Speichereinrichtung (1) gesendet wird.

5. Vorrichtung nach einem der Ansprüche 1 bis 4, wobei das einem Gesamt-Bargeldbetrag und/oder einem Teil-Bargeldbetrag entsprechende Datensignal als verschlüsseltes Datensignal an die Speichereinrichtung (1) gesendet wird.

6. Vorrichtung nach Anspruch 5, wobei die Verschlüsselung des Datensignals mittels Diffie-Hellman-Schlüsselaustausch erfolgt.

7. Vorrichtung nach einem der Ansprüche 5 oder 6, wobei der Datentransport zu der Speichereinrichtung (1) mittels 256-Bit AES-Verschlüsselung verschlüsselt ist.

8. Vorrichtung nach einem der Ansprüche 1 bis 7, wobei eine Mehrzahl von Bargeld-Zähleinrichtungen (2) vorhanden ist, wobei diese Bargeld-Zähleinrichtungen (2) einer zentralen Speichereinrichtung (1) zugeordnet sind und wobei nach Bestimmung eines Gesamt-Bargeldbetrages und/oder Teil-Bargeldbetrages von jeder der Bargeld-Zähleinrichtungen (2) jeweils ein entsprechendes Datensignal drahtlos an die Speichereinrichtung (1) gesendet wird, wobei die zentrale Speichereinrichtung (1) zweckmäßigerweise an einem zentralen Ort, insbesondere in einem Gewerbebetrieb oder außerhalb eines Gewerbebetriebes angeordnet ist.

9. Vorrichtung nach einem der Ansprüche 1 bis 8, wobei der Zeitstempel ein qualifizierter Zeitstempel ist.

10. Vorrichtung nach einem der Ansprüche 1 bis 9, wobei der Zeitstempel auf Echtzeit-Basis generiert wird.

11. Vorrichtung nach einem der Ansprüche 1 bis 10, wobei Abrechnungsdaten von der Speichereinrichtung (1) drahtlos an zumindest einen Drucker (3) sendbar sind und wobei auf Basis der Abrechnungsdaten mit dem Drucker (3) ein Abrechnungsbeleg erstellbar bzw. druckbar ist und wobei die Abrechnungsdaten vorzugsweise als Bluetooth-Signal, insbesondere als verschlüsseltes Bluetooth-Signal von der Speichereinrichtung (1) an den Drucker (3) sendbar sind.

12. Vorrichtung nach einem der Ansprüche 1 bis 11, wobei die Abrechnungsdaten von der Speichereinrichtung (1) über W-LAN oder LAN an das Internet (4) bzw. an eine Cloud weitergeben werden.

13. Vorrichtung nach einem der Ansprüche 1 bis 12, wobei die Speichereinrichtung (1) eine Schnittstelle zur drahtlosen Übermittlung der Abrechnungsdaten an ein POS-System (5) aufweist.

14. Vorrichtung nach einem der Ansprüche 1 bis 13, wobei die Speichereinrichtung (1) neben einem internen Speicher zumindest ein Speichermedium aufweist, insbesondere eine Speicherkarte aufweist, auf dem/auf der die Abrechnungsdaten - insbesondere kundenspezifisch bzw. kundensortiert - langfristig abspeicherbar sind.
